## Europäisches Patentamt

## European Patent Office

## Office européen des brevets

(11) Publication number: **0 175 046**
**B1**

(12) ## EUROPEAN PATENT SPECIFICATION

(45) Date of publication of patent specification: **08.11.89**

(51) Int. Cl.⁴: **F 16 K 7/16, F 16 K 11/20**

(21) Application number: **85102337.4**

(22) Date of filing: **01.03.85**

(54) Valve device.

(30) Priority: **02.03.84 FI 840846**

(43) Date of publication of application:
**26.03.86 Bulletin 86/13**

(45) Publication of the grant of the patent:
**08.11.89 Bulletin 89/45**

(84) Designated Contracting States:
**AT BE CH DE FR GB IT LI LU NL SE**

(56) References cited:
**DE-A-2 107 437**
**DE-A-2 752 549**
**GB-A-1 243 435**
**GB-A-1 269 498**
**US-A-3 477 693**
**US-A-4 006 753**

(73) Proprietor: **LABSYSTEMS OY**
**Pulttitie 9**
**SF-00810 Helsinki 81 (FI)**

(72) Inventor: **Savonlahti, Jukka**
**Kasperinkuja 14 B 14**
**SF-00870 Helsinki 87 (FI)**
Inventor: **Ekholm, Pertti**
**Sammatintie 6 L 130**
**SF-00550 Helsinki 55 (FI)**
Inventor: **Harjunmaa, Hannu**
**Makslahdentie 19 M 38**
**SF-02140 Espoo 14 (FI)**

(74) Representative: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22 (DE)**

Courier Press, Leamington Spa, England.

**Description**

The present invention is concerned with a valve device comprising a body piece having a face; at least first, second and third ducts which extend through said body piece and open at respective openings at said face; a resilient membrane placed above the openings of the ducts; a sealing piece which presses the membrane against the body piece, selectively actuatable valve pins on the sealing piece side of said membrane for pressing said membrane tightly against the edges of respectively associated ones of said openings, and at least one groove formed in the face of the body piece and extending between two of said ducts. A valve device of this kind is for example known from DE-A-2 107 437 and is intended for use in chemical analyses. Similar valve devices are known from US-A-3 477 693 and US-A-4 006 753. Of these further devices the device of US-A-3 477 693 is intended for fluid control in plumbing systems and the device of US-A-4 006 753 is intended for the selective supply of ink, solvent or drying gas to an ink jet printer.

Of these known devices only the device of DE-A-2 107 437 is involved in a system where accurate dosage, mixing or distribution of small quantities of liquid or gas are important. In the known arrangement flow through the groove is only possible when the associated openings are open and this places unnecessary constraints on the designer. Moreover, the layout of the system is such that it is not very accurate when used to dispense small quantities of liquids.

With respect to US-A-4 006 753 it will also be noted that the membrane is, in its normal state, spaced from the sealing surface in which the openings of the ducts are located, so that liquid can be freely sucked into any duct. The cited structure is moreover not suitable for the dispensing of small quantities of liquids with high precision since a significant and indeterminate amount of liquid will always be left between the membrane and the surface.

Moreover, it will be noted that the valve device of US-A-3 477 693 is also not suitable for achieving high precision in the dispensing of small quantities of liquid since there is no guarantee that all the liquid admitted beneath the membrane will be transferred into the outlet duct on closing the membrane. It would be quite possible for pockets of liquid to remain trapped beneath the membrane.

The object underlying the present invention is thus to provide a valve device of the initially named kind which is well suited for the precise transfer of small quantities of fluid, in particular in an analyser that measures optical properties, and which provides greater flexibility for the designer by permitting selective flow through the groove without an undue increase in complexity of the valve device.

In order to satisfy this object the present invention provides a valve device of the initially named kind which is characterised in that when the pins do not press on the membrane, the membrane contacts the face of the body piece around the openings; in that at least one of the openings is a conical recess; in that said groove opens at one end into the side wall of said conical recess; and in that the valve pin associated with the opening formed as a conical recess is movable towards said opening to press said membrane into said conical recess and fully close that opening and the entrance to the groove.

Not only does this arrangement allow precise metering of fluids it also enables a further tier of communication to be established in a valve device of the initially mentioned kind. Even when the membrane normally closes the openings of the various ducts, selective communication is possible between specified ducts by providing a groove in the face of the body piece containing those ducts. This groove can itself be selectively shut off as a path of communication by means of the known valve pins which press the membrane against a conical seat provided deeper in the body piece than the groove, i.e. below the level of the groove.

The provision of grooves in a body piece in a valve device is known per se from DE-A-2 752 549, however this valve device does not fall within the preamble of claim 1. More particularly, the grooves of this valve device have a different function from the groove of the present application since in DE-A-2 752 549 the grooves form connecting channels between the ducts themselves and these connecting channels are closed between the openings of the ducts by pressing the membrane by means of pins against the walls of the connecting channels. This arrangement is not particularly suitable for valve devices for high precision dispensing of fluids because a bulge of the edge of the membrane in the connecting channel may cause dosage errors. Moreover, there is only one tier of communication possible in this prior art arrangement. Through the two tier or two mode system of the present application it is possible to construct valve devices for particular applications, depending on the purpose of use.

Further advantageous embodiments of the invention are set forth in the subordinate claims. The embodiment of claim 10 is particularly advantageous since in this way the valve device is particularly adapted for use in a dilution method in accordance with the not prepublished document EP-A-144 134.

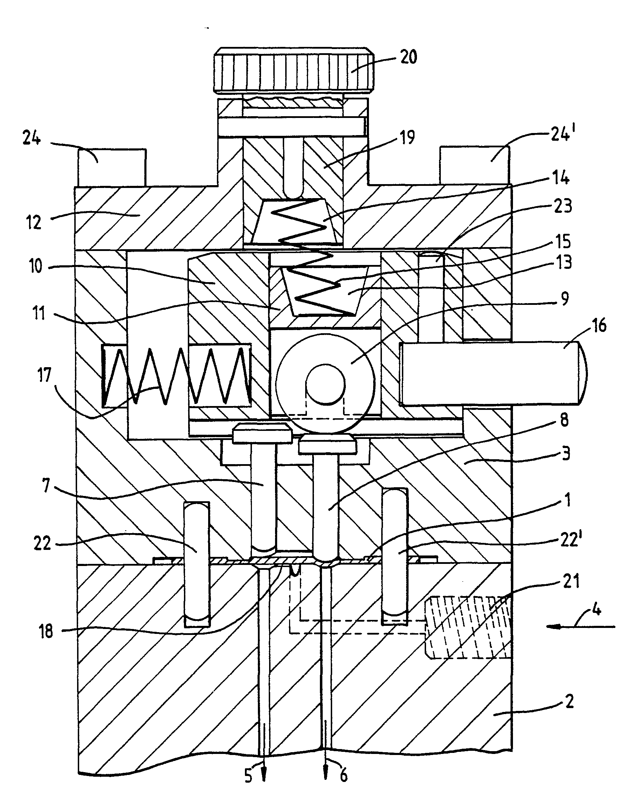

The invention will be illustrated in more detail in the following by means of the attached drawing, which is a cross-sectional view of a preferred embodiment of the invention.

The essential part of the device consists of a resilient membrane 1, which is pressed against the body piece 2 by means of a sealing piece 3. An inlet duct 4 and outlet ducts 5 and 6 open themselves through the body piece 2 underneath the membrane 1. The sealing piece 3 presses the membrane 1 tightly against the body piece 2 annularly around the ducts 4, 5 and 6. However, above the openings of the ducts 4, 5 and 6 and above the zone between the said openings, there is a recess in the sealing piece 3, which recess permits that the membrane 1 yields somewhat upwards and thereby permits movement of liquid underneath the membrane. When liquid is passed into the inlet duct 4 at a sufficient pressure, the membrane 1 yields above the opening of the ducts and the liquid moves into the outlet duct 5 or 6.

In the sealing piece 3, there are bores above the openings of the outlet ducts 5 and 6 in the body piece, into which said bores moving pins 7 and 8 have been fitted. When the pin 7 or 8 is pressed downwards against the membrane 1, the membrane is pressed against the corresponding opening and, thereby, closes the opening.

The pin 7 or 8 is pressed downwards by a roll 9. The roll 9 is mounted on a glide fork 11 located in a hole extending vertically through a carriage 10. The carriage 10 is fitted so that it glides horizontally in a recess located in the top face of the sealing piece 3, which recess is closed by a cover 12.

In the top portion of the glide fork 11, there is a shallow recess 13, and in the cover 12, there is a similar shallow recess 14. In the space formed by the recesses 13 and 14, there is a spiral spring 15, which presses the glide fork 11 downwards. Since the mouths of the recesses 13 and 14 are wider than the spring, the carriage 10 can move a sufficient distance in order to shift the roll 9 onto any one of the pins 7 or 8.

For the purpose of controlling the carriage 10, the device is provided with a control pin 16 fitted in a bore made through the sealing piece 3 into one end of the carriage and with a spiral spring 17 fitted in a bore made into the opposite end of the carriage, which said spring 17 presses the carriage against the control pin. In its basic position, the roll 9 is placed on the pin 8, from which it can be shifted onto the pin 7 by pushing the control pin 16 by means of a separate solenoid.

On the face of the body piece 2, between the opening of the inlet duct 4 and the opening of the outlet duct 5, there is a groove 18, which permits sucking of liquid out of the outlet duct 5 into the inlet duct 4.

The spring recess 14 in the cover 12 is placed in a separate piece 19, which is attached to a hole extending through the cover by means of a stopper 20 provided with a bayonet-socket locking. In this way, when necessary, the spring 15 can be removed easily, and the pin 8 does not attempt to deform the membrane 1 unnecessarily, e.g., during autoclave treatment.

In the figure there can also be seen: a recess 21 for a hose connection at the inlet duct 4, aligning pins 22 and 22' for correct positioning of the body part 2, of the membrane 1, and of the sealing piece 3, a fastening pin 23 for attaching the control pin 16 to the carriage 11, as well as bolts 24 and 24' for connecting the body piece 2, the sealing piece 3, and the cover 12 together.

The device may be constructed of conventional plastic and steel materials. If the device must be autoclaved when it is used, of course, it is to be taken into account that the components must tolerate the required temperature (e.g. 120°C). The body piece 2, the sealing piece 3, and the cover 12 are made, e.g., of polycarbonate plastic, the membrane 1, e.g., of silicon rubber, and the carriage 10, e.g., of teflon plastic.

The diameter of the device shown in the figure is about 50 mm, and the diameter of the ducts 4, 5 and 6 about 1 mm.

The device in accordance with the figure is intended in particular for precise but automatic dilution of liquid samples in an analyzer that measures optical properties. In such a case, a hose, together with a tubing pump related to the hose and revolving in two directions, is connected to the duct 4, the mouth of the duct 6 opens inside the duct 5, and the duct 6 is additionally provided with a side duct and a piston in the said side duct. The operation is started by sucking the diluent through the duct 5 into the duct 4. Thereupon, the opening of the duct 5 is closed by means of the pin 7, and diluent is also pumped into the duct 6. The opening of the duct 6 is allowed to be closed again, and the sample is sucked through the joint tip of the ducts 5 and 6 into the duct 6 by means of the piston placed in its side duct. When diluent is now being pumped out of the duct 4 and, at the same time, sample is being pumped out of the duct 6 by means of the piston into the duct 5, a diluted sample is obtained, whose ratio of dilution depends on the rates of pumping that were chosen.

In the embodiment shown in the figure, the face of the body piece 2 underneath the membrane 1 is plane. It may also be made, e.g., as a concave or convex spherical or cylindrical face. If the face is convex, it is possible to place several solenoid-controlled closing pins of the ducts as directed within a very little area. On the other hand, if the face is concave, it is possible to control several pins placed perpendicularly to the face by means of one member placed at extensions of the upper ends of the pins, e.g. by means of a cam disc.

**Claims**

1. A valve device comprising a body piece (2) having a face; at least first, second and third ducts (4, 5, 6) which extend through said body piece (2) and open at respective openings at said face;

a resilient membrane (1) placed above the openings of the ducts (4, 5, 6);

a sealing piece (3) which presses the membrane against the body piece (2); selectively actuatable valve pins (7, 8) on the sealing piece side of said membrane (1) for pressing said membrane (1) tightly against the edges of respectively associated ones of said openings; and at least one groove (18) formed in the face of the body piece (2) and extending between two of said ducts (4, 5, 6), characterised in that when the pins (7, 8) do not press on the membrane (1) the membrane (1) contacts the face of the body piece (2) around the openings; in that at least one of the openings is a conical recess; in that said groove opens at one end into the side wall of said conical recess; and in that the valve pin (7) associated with the opening formed as a conical recess is movable towards said opening to press said membrane (1) into said conical recess and fully close that opening and the entrance to the groove (18).

2. A valve device in accordance with claim 1, characterised in that the means for selectively actuating said valve pins (7, 8) comprises a spring (15) biased pressing member (9) which is mounted on a guide piece (11) which is slidably disposed in a bore of a carriage (10), with said bore being arranged substantially perpendicular to said membrane (1); and in that said carriage is displaceable in a plane perpendicular to said bore to bring said pressing member into alignment with each of said pins.

3. A valve device in accordance with claim 2, characterised in that said pressing member comprises a roller.

4. A valve device in accordance with either of claims 2 or 3, characterised in that said carriage (11) is biased by a spring (17) into a first position in which said pressing member (9) contacts one (7) of said pins (7, 8); and in that a means (16) is provided for moving said carriage against the force of said spring (17) so that said pressing member (9) contacts another one (8) of said pins (7, 8).

5. A valve device in accordance with one of claims 2, 3 or 4 characterised in that said spring (15) for biasing said pressing member (9) has a first end bearing on said guide piece and movable with said carriage (11) and a second end which is stationary.

6. A valve device in accordance with claim 5, characterised in that said second end of said spring (15) bears against said sealing piece (3).

7. A valve device in accordance with claim 6, characterised in that said second end of said spring (15) bears against a removable stopper (20) in particular a stopper secured to said sealing piece (3) via a bayonet connection.

8. A valve device in accordance with claim 5, characterised in that said means for moving said carriage (11) comprises a pin (16).

9. A valve device in accordance with any one of the preceding claims, characterised in that the face of said body piece (2) beneath said membrane is either plane or concave or convex.

10. A valve device in accordance with any one of the preceding claims, characterised in that a hose, together with a tubing pump related to the hose and revolvable in two directions, is connected to said first duct (4); in that said third duct (6) has a mouth remote from said membrane which opens inside said second duct (5), with said second duct (5) and said third duct (6) having a joint tip; and in that said third duct (6) is additionally provided with a side duct and a piston in the said side duct.

**Patentansprüche**

1. Eine Ventilvorrichtung umfassend ein Körperstück (2) mit einer Stirnfläche; wenigstens ersten, zweiten und dritten Leitungen (4, 5, 6), welche sich durch das Körperstück (2) erstrekken und an entsprechenden Öffnungen an der Stirnfläche münden; eine über den Öffnungen der Leitungen (4, 5, 6) angeordnete elastische Membran (1); ein Verschlußstück (3), das die Membran gegen das Körperstück (2) drückt; einzeln betätigbare Ventilbolzen (7, 8) auf der Verschlußstückseite der Membran (1), um die Membran (1) fest gegen die Kanten der entsprechend zugeordneten Öffnungen zu drücken: und wenigstens eine in die Stirnfläche des Körperstücks (2) eingearbeitet ist und sich zwischen zwei der Leitungen (4, 5, 6) erstreckende Nut (18), dadurch gekennzeichnet, daß die Membran (1), wenn die Bolzen (7, 8) nicht auf die Membran (1) drücken, die Stirnfläche des Körperstückes (2) um die Öffnungen berührt; daß wenigstens eine der Öffnungen eine konische Vertiefung ist; daß die Nut an einem Ende in der Seitenwand der konischen Vertiefung mündet; und daß der Ventilbolzen (7), der der als konische Vertiefung ausgebildeten Öffnung zugeordnet ist, gegen die Öffnung bewegbar ist, um die Membran (1) in die konische Vertiefung zu drücken und diese Öffnung und den Eingang zur Nut (18) vollständig zu schließen.

2. Eine Ventilvorrichtung nach Anspruch 1, dadurch gekennzeichnet, daß das Mittel zur selektiven Betätigung der Ventilbolzen (7, 8) ein durch eine Feder (15) belastetes Druckelement (9), das an einem Führungsstück (11) befestigt ist, welches in einer Bohrung eines Schlittens (10) verschiebbar angeordnet ist, wobei diese Bohrung im wesentlichen senkrecht zur Membran (1) angeordent ist, umfaßt; und daß der Schlitten verschiebbar in einer Ebene rechtwinkelig zu der Bohrung ist, um das Druckelement in Ausrichtung mit jedem der Bolzen zu bringen.

3. Eine Ventilvorrichtung nach Anspruch 2, dadurch gekennzeichnet, daß das Druckelement eine Rolle umfaßt.

4. Eine Ventilvorrichtung nach Anspruch 2 oder 3, dadurch gekennzeichnet, daß der Schlitten (11) durch eine Feder (17) in eine erste Position belastet wird, in der das Druckelement (9) an einem (7) der Bolzen (7, 8) anliegt; und daß ein Mittel (16) vorgesehen ist, um den Schlitten gegen die Kraft der Feder (17) zu bewegen, so daß das Druckelement (9) an einem anderen (8) der Bolzen (7, 8) anliegt.

5. Eine Ventilvorrichtung nach einem der Ansprüche 2, 3 oder 4, dadurch gekennzeichnet, daß die Feder (15) zur Belastung des Druckelementes (9) ein erstes am Führungsstück anliegendes und mit dem Schlitten (11) bewegbares Ende und ein zweites Ende, das ortsfest ist, hat.

6. Eine Ventilvorrichtung nach Anspruch 5, dadurch gekennzeichnet, daß sich das zweite Ende der Feder gegen das Verschlußstück (3) abstützt.

7. Eine Ventilvorrichtung nach Anspruch 6, dadurch gekennzeichnet, daß sich das zweite Ende der Feder (15) gegen einen abnehmbaren Verschluß (20) insbesondere einen am Verschlußstück (3) über einen Bayonet-Verschluß befestigten Verschluß abstützt.

8. Eine Ventilvorrichtung nach Anspruch 5, dadurch gekennzeichnet, daß das Mittel zur Bewegung des Schlittens (11) einen Bolzen (16) umfaßt.

9. Eine Ventilvorrichtung nach einem der vorhergehenden Ansprüche, dadurch gekennzeichnet, daß die Stirnfläche des Körperstücks (2) unter der Membran entweder eben oder konkav oder konvex ist.

10. Eine Ventilvorrichtung nach einem der vorhergehenden Ansprüche, dadurch gekennzeichnet, daß ein Schlauch zusammen mit einer Schlauchpumpe, die dem Schlauch zugeordnet und in zwei Richtungen drehbar ist, mit der ersten Leitung (4) verbunden ist; daß die dritte Leitung (6) eine von der Membran entfernte Mündung hat, die in die zweite Leitung (5) mündet, wobei die zweite Leitung (5) und die dritte Leitung (6) ein gemeinsames Ende haben; und daß die dritte Leitung (6) zusätzlich mit einer Seitenleitung und einem Kolben in dieser Seitenleitung ausgestattet ist.

**Revendications**

1. Dispositif de vanne comprenant un corps de vanne (2) ayant une face; au moins un premier, un second et un troisième conduits (4, 5, 6) qui traversent ledit corps de vanne (2) et débouchent en des ouvertures respectives sur ladite face; une membrane élastique (1) placée au-dessus des ouvertures des conduits (4, 5, 6); une pièce d'étanchéité (3) qui appuie la membrane contre le corps de vanne (2); des broches de vanne pouvant être actionnées de manière sélective (7, 8) sur le côté de la pièce d'étanchéité de ladite membrane (1) pour appuyer ladite-membrane (1) serrée contre les arêtes des ouvertures respectives associées desdites ouvertures; et au moins une rainure (18) formée sur la face du corps de vanne (2) et s'étendant entre deux desdits conduits (4, 5, 6), caractérisé par le fait que lorsque les broches (7, 8) n'appuient pas sur la membrane (1), la membrane (1) est en contact avec la face du corps de vanne (2) autour des ouvertures; par le fait qu'au moins une des ouvertures comporte un évidement conique; par le fait que ladite rainure s'ouvre à une extrémité dans la paroi latérale dudit évidement conique; et par le fait que la broche de vanne (7) associée à l'ouverture en forme d'évidement conique est mobile en direction de ladite ouverture pour appuyer ladite membrane (1) à l'intérieur dudit évidement conique et fermer complètement cette ouverture et l'entrée de la rainure (18).

2. Dispositif de vanne selon la revendication 1, caractérisé par le fait que le moyen pour actionner de manière sélective lesdites broches de vanne (7, 8) comprend un ressort (15) sollicitant en compression un élément (9) qui est monté sur une pièce de guidage (11) installée en coulissement dans un alésage d'un chariot (10), ledit alésage étant orienté dans une direction sensiblement perpendiculaire à ladite membrane (1); et par le fait que ledit chariot est mobile dans un plan perpendiculaire audit alésage pour amener ledit élément de compression en alignement avec chacune desdites broches.

3. Dispositif de vanne selon la revendication 2, caractérisé par le fait que ledit élément de compression comprend un rouleau.

4. Dispositif de vanne selon la revendication 2 ou 3, caractérisé par le fait que ledit chariot (11) est sollicité par un ressort (17) jusque dans une première position dans laquelle ledit élément de compression (9) est en contact avec une (7) desdites broches (7, 8); et par le fait qu'un moyen (16) est prévu pour déplacer ledit chariot en s'opposant à la force dudit ressort (17) afin que ledit élément de compression (9) vienne en contact avec une autre (8) desdites broches (7, 8).

5. Dispositif de vanne selon la revendication 2, 3 ou 4, caractérisé par le fait que ledit ressort (15) pour solliciter ledit élément de compression (9) comporte une première extrémité appuyant sur ladite pièce de guidage et mobile avec ledit chariot (11) et une seconde extrémité qui est fixe.

6. Dispositif de vanne selon la revendication 5, caractérisé par le fait que ladite seconde extrémité dudit ressort (15) appuie contre ladite pièce d'étanchéité (3).

7. Dispositif de vanne selon la revendication 6, caractérisé par le fait que ladite seconde extrémité dudit ressort (15) appuie contre un arrêtoir amovible (20) en particulier un arrêtoir fixé à ladite pièce d'étanchéité (3) par un montage à baïonnette.

8. Dispositif de vanne selon la revendication 5, caractérisé par le fait que ledit moyen pour déplacer ledit chariot (11) comprend une broche (16).

9. Dispositif de vanne selon l'une quelconque des revendications précédentes, caractérisé par le fait que la face dudit corps de vanne (2) au-dessous de ladite membrane est soit plane soit concave, soit convexe.

10. Dispositif de vanne selon l'une quelconque des revendications précédentes, caractérisé par le fait qu'une conduite souple, avec une pompe à tube liée à la conduite souple et mobile dans deux directions, est reliée audit premier conduit (4); par le fait qu'un troisième conduite (6) possède une embouchure éloignée de ladite membrane qui s'ouvre à l'intérieur dudit second conduit (5), ledit second conduit (5) et ledit troisième conduit (6) ayant une extrémité commune; et par le fait que ledit troisième conduit (6) comporte en outre un conduit latéral avec un piston à l'intérieur dudit conduit latéral.